# EUROPÄISCHE PATENTSCHRIFT

(11) **EP 2 585 509 B1**
(45) Veröffentlichungstag und Bekanntmachung des Hinweises auf die Patenterteilung: **23.07.2014**
(21) Anmeldenummer: 11725942.4
(22) Anmeldetag: 20.06.2011
(51) Int. Cl.: C08G 18/40, C08G 18/48, C08G 18/58, C08G 18/66, C08G 18/79, E21B 36/00, C09D 175/04

(54) **BESCHICHTETE TEILE UND DEREN VERWENDUNG**
COATED PARTS AND USE THEREOF
ÉLÉMENTS DOTÉS D'UN REVÊTEMENT ET LEUR UTILISATION

(30) Priorität: 24.06.2010 EP 10305677
(43) Veröffentlichungstag der Anmeldung: 01.05.2013
(73) Patentinhaber: Bayer Intellectual Property GmbH, 40789 Monheim am Rhein (DE)
(72) Erfinder: KRAUSE, Jens, 51375 Leverkusen (DE)
(74) Vertreter: BIP Patents
(86) Internationale Anmeldenummer: PCT/EP2011/060216
(87) Internationale Veröffentlichungsnummer: WO 2011/161047

(56) Entgegenhaltungen:
- EP-A1- 0 512 198
- EP-A1- 1 375 577
- WO-A1-2009/141080
- WO-A1-2010/003788
- DATABASE WPI Week 200947 Thomson Scientific, London, GB; AN 2009-K83402 XP002601276, -& CN 101 457 018 A (YANTAI WANHUA NEW MATERIAL SCI&TECHNOL) 17. Juni 2009 (2009-06-17)

## Beschreibung

Die Erfindung betrifft mit Polyurethanen beschichtete Teile und deren Verwendung, vorzugsweise im Meer.

Bei der Isolierung/Dämmung von Teilen/Elementen wie Rohren, Verbindungselementen, Förderanlagen, insbesondere bei Tiefseerohren kommen Polyurethane zum Einsatz. Die Beschichtung kann hierbei entweder direkt auf das zu beschichtende Element aufgebracht werden (beispielsweise gegossen werden), wie es im Fall von "Field Joints" durchgeführt wird. Alternativ kann die Beschichtung auch indirekt erfolgen, indem die Beschichtung separat hergestellt wird, die dann beispielsweise durch Verschrauben auf das zu isolierende Element aufgebracht wird. Diese Variante wird beispielsweise im Fall von "Bend Restriktoren" durchgeführt. Diese Elemente dienen z.B. der Förderung von Öl und Gas, wobei das Polyurethan eine isolierende Beschichtung darstellt. Diese Polyurethane sind normalerweise massiv oder syntaktisch. Der Begriff syntaktische Kunststoffe umfasst im Allgemeinen Kunststoffe, die Hohlfüllstoffe enthalten. Hierbei gibt es sowohl Hohlglas- als auch Hohlkunststofffüllstoffe. In den meisten Fällen handelt es sich um Hohlglaskugeln. Syntaktische Kunststoffe fmden üblicherweise aufgrund ihrer vorteilhaften Druckfestigkeit und Temperaturbeständigkeit Verwendung als thermische Isolierbeschichtungen, bevorzugt im OffShore- Bereich. Weitere Anwendungen im Off-Shore- Bereich sind Bend stiffners, Bend restrikors, Bojen, Klammersysteme, Kabel, Durchflusssysteme und Ballasttanks sowie X-Trees. Mit der Exploration von immer tieferen Ölfeldern steigen die Anforderungen an die Beschichtungen. Heute werden Materialien gesucht, die einerseits elastisch sind, um die Elemente beispielsweise leicht zu verformen, andererseits werden hochtemperaturstabile Beschichtungen gesucht, welche sich der Hydrolyse durch das Wasser widersetzen. Heute im Einsatz fmden sich neben anderen Kunststoffen, wie beispielsweise Polypropylen, ausschließlich massive oder syntaktische, nicht geschäumte Polyurethanelastomere, welche teilweise mit Epoxidharzen verstärkt sind. Diese Systeme sind sowohl ausreichend elastisch als auch temperaturstabil. Allerdings zeigen die derzeitigen Polyurethanelastomere eine sehr schlechte Beständigkeit gegen Hydrolyse bei Temperaturen über 50°C. Da heutige Beschichtungen bis zu 20 Jahre im Einsatz sind und eine Temperaturbeständigkeit von > 80°C, teilweise sogar > 100°C gefordert wird, sind die derzeit eingesetzten Polyurethane nicht ausreichend. Vielfach werden daher Polypropylenmaterialien eingesetzt, welche aber den Nachteil haben, dass sie nicht vor Ort, d.h. z.B. auf einem Schiff, appliziert werden können. Der durchzuführende Spritzgussprozess ist zudem viel zu aufwendig. Nachteilig ist weiterhin, dass diese Kunststoffe bei sehr tiefen Temperaturen spröde werden und wie Glas zerbrechen. Ein weiterer Nachteil ist, dass in vielen Anwendungen komplexe Geometrien gegossen werden müssen, wo die Spritztechnik/thermoplastische Verarbeitung nicht anwendbar ist.

Aufgabe war es daher, ein System zur Verfügung zu stellen, das
a) in einem einfachen Gießverfahren verarbeitet werden kann,
b) als möglichst zweikomponentiges Reaktionsgemisch vor Ort verarbeitet werden kann,
c) möglichst keine toxischen Substanzen enthält und abgibt,
d) bei Raumtemperatur verarbeitet werden kann,
e) möglichst eine Verarbeitungszeit von < 5 min. aufweist, wobei das Elastomer nach 10 min. Entformung eine Härte von > 50 Shore A bzw. > 20 Shore C aufweist und elastisch ist,
f) einfach und schnell hergestellt werden kann,
g) eine gute Alterung bei hohen Temperaturen in Wasser aufweist,
h) eine maximale Reißdehnung von > 30 % aufweist,
i) eine Härte von > 85 Shore A und < 85 Shore D aufweist.

Diese Aufgabe konnte überraschenderweise durch die Kombination von bestimmten hochfunktionellen, langkettigen Polyolen mit bestimmten modifizierten Polyisocyanaten auf Basis von Diphenylmethandiisocyanat (MDI) gelöst werden.

Gegenstand der vorliegenden Erfindung sind daher beschichtete Teile, die mit Polyurethanen beschichtet sind, wobei die Polyurethane
in Gegenwart mindestens eines Metallkatalysators aus der Gruppe bestehend aus Quecksilber-, Cobalt-, Hafnium-, Aluminium-, Cadmium-, Blei-, Eisen-, Zinn-, Zink-, Bismuth-, Zirkonium- und Titankatalysatoren und deren Abmischungen erhältlich sind aus:
a) mindestens einem Polyisocyanat basierend auf Diphenylmethandiisocyanat (MDI) mit einem NCO-Gehalt von 18 bis 34 Gew.-%, einem Anteil von höchstens 20 Gew.-%, bezogen auf eingesetztes Polyisocyanat a), an 2,4'-MDI-Isomer und einem Anteil von mindestens 5 Gew.-%, bezogen auf eingesetztes Polyisocyanat a), an mit Carbodiimid- und Uretonimingruppen modifiziertem Diphenylmethandiisocyanat, welches oberhalb von 30°C flüssig ist,
b) mindestens einem Ethylen- und/oder Propylenoxid basierten Polyetherpolyol mit einer Funktionalität von 5 bis 8, bevorzugt von 6 bis 7, einer OH-Zahl von 5 bis 45 mg KOH/g Substanz und einem Gehalt an Ethylenoxideinheiten von 0 bis 50 Gew.-%,
c) mindestens einem Kettenverlängerer mit einem Molekulargewicht von 62 bis 500 g/mol und einer Funktionalität von 2 bis 3,
d) 2 bis 15 Gew.-%, bezogen auf die Komponenten b) bis e), mindestens eines Epoxidharzes mit einem zahlenmittleren Molekulargewicht von ≤ 10000 g/mol,
e) 0 bis 50 Gew.-%, bezogen auf die Komponenten b) bis e), Polyolen aus der Gruppe bestehend aus Ethylenoxid und/oder Propylenoxid basierten Polyethern mit einer OH-Zahl von 50 bis 400 mg KOH/g Substanz, einer Funktionalität von 5 bis 7 und einem Gehalt an Ethylenoxideinheiten von 0 bis 50 Gew.-%, Ethylenoxid und/oder Propylenoxid basierten Polyethern mit einer OH-Zahl von 20 bis 200 mg KOH/g Substanz, einer Funktionalität von ≥2 bis <5 und einem Gehalt an Ethylenoxideinheiten von 0 bis 50 Gew.-%, Polyolen mit einer Funktionalität von 2 auf Basis von Polytetramethylenglykolen mit einem Molekulargewicht von 600 bis 3000 g/mol, OH-terminierten Polybutandienen, Polycarbonatdiolen und Abmischungen davon,
f) gegebenenfalls UV- und Oxidationsstabilisatoren,
g) gegebenenfalls Hilfsstoffen und/oder Additiven und
h) gegebenenfalls Haftvermittlern,
wobei das Verhältnis von NCO-Gruppen zu mit NCO-Gruppen reagierenden Gruppen der Komponenten b), c) und e) von 0,70 bis 1,30, bevorzugt von 0,85:1 bis 1,2:1, besonders bevorzugt von 0,95:1 bis 1,1:1 liegt.

Unter Diphenylmethandiisocyanat (MDI) sind in dieser Anmeldung die Isomeren, insbesondere 4,4'-MDI, 2,4'-MDI, 2,2'-MDI und Abmischungen davon ("monomeres MDI" ["mMDI"]) und polymere Bestandteile ("polymeres MDI" ["pMDI"]) sowie Mischungen von mMDI mit pMDI zu verstehen (allgemein auch als technisches MDI bezeichnet). Besonders bevorzugt wird jedoch ein MDI ohne polymere Bestandteile (mMDI) eingesetzt.

Der Gehalt an 2,4'-MDI in der Komponente a) liegt vorzugsweise unter 10 Gew.-%, besonders bevorzugt unter 5 Gew.-%, bezogen auf Polyisocyanat.

Vorzugsweise liegt der Gehalt an mit Carbodiimid- und Uretonimingruppen modifiziertem Diphenylmethandiisocyanat bei mindestens 20 Gew.-% und höchstens 100 Gew.-%, bezogen auf eingesetztes Polyisocyanat a).

Eine Modifizierung des MDI ist prinzipiell eine Reaktion der NCO Gruppe des MDI. Die Bildung eines Prepolymers ist ein Spezialfall einer Modifizierung und betrifft die Reaktion einer Verbindung, die NCO reaktive Gruppen aufweist, mit den NCO- Gruppen des MDI.

In einer besonders bevorzugten Ausführungsform wird das eingesetzte Polyisocyanat a) durch Umsetzung von Diphenylmethandiisocyanat (MDI) mit einem Polyetherpolyol auf Basis von Ethylen- und/oder Propylenoxid oder Polytetramethylenglykol erhalten.

Der NCO-Gehalt der Polyisocyanatkomponente a) liegt bevorzugt zwischen 23 und 30 Gew.-%.

Von Vorteil ist, dass die Isocyanatkomponente einen hohen NCO Gehalt aufweist (also z.B. eine geringe Modifizierung), eine niedrige Viskosität besitzt und gleichzeitig auch bei tiefen Temperaturen flüssig bleibt und nicht kristallisiert.

Bei Raumtemperatur flüssige Produkte mit einer Viskosität von ≤ 2000 mPa*s bei 25°C sind bevorzugt. Dies entspricht zumeist einem NCO Gehalt von > 20%.

Um eine Kristallisation des gegebenenfalls noch vorhandenen freien MDI in den MDI Prepolymeren zu vermeiden, kann mehrkerniges MDI (auch unter dem Begriff polymeres MDI bekannt) dem Prepolymer zugegeben werden. Bevorzugt wird jedoch kein polymeres MDI verwendet.

Bevorzugt wird die Komponente b) in einer Menge von mindestens 30 Gew.-% und höchstens 85 Gew.-% , bezogen auf die Komponenten b) bis e), eingesetzt, besonders bevorzugt von 40 bis 85 Gew.-%, ganz besonders bevorzugt von 55 bis 80 Gew.-%. Bevorzugt liegt der Ethylenoxidgehalt bei 5 bis 35 Gew.-%.

Bevorzugt wird die Komponente e) in einer Menge von mindestens 0,5 Gew.-% und höchstens 40 Gew.-%, bezogen auf die Komponenten b) bis e), eingesetzt, besonders bevorzugt von 0,5 bis 20 Gew.-%, vorzugsweise von 1 bis 12 Gew.-% und ganz besonders bevorzugt von 3 bis 12 Gew.-%.

Polyetherpolyole, die als Komponente b) oder e) eingesetzt werden können, werden entweder mittels alkalischer Katalyse oder mittels Doppelmetallcyanidkatalyse oder gegebenenfalls bei stufenweiser Reaktionsführung mittels alkalischer Katalyse und Doppelmetallcyanidkatalyse aus einem Startermolekül und Epoxiden, bevorzugt Ethylen (EO)- und/oder Propylenoxid (PO) hergestellt und weisen endständige Hydroxylgruppen und/oder Amingruppen auf. Als Starter kommen hierbei die dem Fachmann bekannten Verbindungen mit Hydroxyl- und/oder Aminogruppen, sowie Wasser in Betracht. Die Funktionalität der Starter beträgt hierbei mindestens 2 und höchstens 8. Selbstverständlich können auch Gemische von mehreren Startern verwendet werden. Des Weiteren sind als Polyetherpolyole auch Gemische von mehreren Polyetherpolyolen einsetzbar. Als Polyolkomponente werden vorzugsweise Polyetherpolyole, besonders bevorzugt Polyoxypropylenpolyole und/oder Polyoxyethylenpolyole eingesetzt. Zur Herstellung des Polyisocyanates können als Polyole auch zusätzlich niedermolekulare Oligomere auf Basis von EO und/oder PO wie etwa Dipropylenglykol, Tripropylenglykol o. ä. verwendet werden.

Verfahrenstechnisch vorteilhaft ist, dass der Volumenstrom der Isocyanatkomponente a) und der Volumenstrom der NCO- reaktiven Komponenten b), c) und e) ähnlich groß sind.

Als Kettenverlängerer (auch Vernetzer genannt) werden Verbindungen mit einer Funktionalität von 2 bis 3 und einem Molekulargewicht von 62 bis 500 g/mol eingesetzt. Vorzugsweise wird der Kettenverlängerer in einer Menge von mindestens 5 Gew.-% und höchstens 35 Gew.-% bezogen auf die Komponenten b) bis e), besonders bevorzugt von 12 bis 25 Gew.-% eingesetzt. Es können aromatische aminische Kettenverlängerer, wie zum Beispiel Diethyltoluoldiamin (DETDA), 3,3'-Dichloro-4,4'-diamino-diphenylmethan (MBOCA), 3,5-Diamino-4-chloro-isobutylbenzoat, 4-Methyl-2,6-bis(methylthio)-1,3-diaminobenzol (Ethacure 300), Trimethylenglykol-di-p-aminobenzoat (Polacure 740M), 4,4'-Diamino-diphenylmethan (MDA) sowie deren Komplexe mit Salzen, wie z.B. Natrium- und/oder Lithiumchlorid und 4,4'-Diamino-2,2'-dichloro-5,5'-diethyldiphenylmethan (MCDEA) verwendet werden. Bevorzugt sind MBOCA und 3,5-Diamino-4-chloro-isobutylbenzoat. Aliphatische aminische Kettenverlängerer können ebenfalls eingesetzt oder mit verwendet werden. Oftmals haben diese einen thioxotropen Effekt auf Grund ihrer hohen Reaktivität. Als nicht aminische Kettenverlängerer werden oftmals beispielsweise 2,2'-Thiodiethanol, Propandiol-1,2, Propandiol-1,3, Glycerin, Butandiol-2,3, Butandiol-1,3, Butandiol-1,4, 2-Methylpropandiol-1,3, Pentandiol-1,2, Pentandiol-1,3, Pentandiol-1,4, Pentandiol-1,5, 2,2-Dimethylpropandiol-1,3, 2-Methylbutandiol-1,4, 2-Methylbutandiol-1,3, 1,1,1-Trimethylolethan, 3-Methyl-1,5-Pentandiol, 1,1,1-Trimethylolpropan, 1,6-Hexandiol, 1,7-Heptandiol, 2-Ethyl-1,6-Hexandiol, 1,8-Octandiol, 1,9-Nonandiol, 1,10-Decandiol 1,11-Undecandiol, 1, 12-Dodecandiol, Diethylenglykol, Triethylenglykol, 1,4-Cyclohexandiol, 1,3-Cyclohexandiol und Wasser verwendet. Ganz besonders bevorzugt werden nicht-aminische Vernetzer eingesetzt. Ganz besonders bevorzugt werden OH-funktionelle Vernetzer mit einer Funktionalität von 2 eingesetzt. Der bevorzugte Vernetzer ist 1,4-Butandiol.

Als Epoxidharz können beispielsweise Umsetzungsprodukte aus Epichlorhydrin mit Bisphenol A oder Bisphenol F eingesetzt werden. Das zahlenmittlere Molekulargewicht des Umsetzungsproduktes ist bevorzugt kleiner 10000 g/mol, besonders bevorzugt kleiner 1000 g/mol.

Die Summe aus den Komponenten b) bis e) beträgt 100 Gew.-%.

Bei den Katalysatoren handelt sich um metallhaltige Katalysatoren, wie z.B. Lewissäureverbindungen, beispielsweise auf Basis von Zinn, Blei, Hafnium, Cobalt, Zink, Titan, Zirkonium, aber auch Cadmium, Bismut (beispielsweise Bismutneodecanoat) und Eisen. Ein Überblick über den Stand der Technik wird in WO 2005/058996 gegeben. Hier wird beschrieben, wie mit Titan- und Zirkoniumkatalysatoren gearbeitet wird. Es werden auch zahlreiche Kombinationsmöglichkeiten von verschiedenen Katalysatoren erwähnt. Katalysatorsysteme, die zumindest weniger toxisch als Quecksilberkatalysatoren sind, z.B. auf Basis von Zinn, Zink, Bismut, Titan oder Zirkonium, sind im Markt ebenfalls bekannt und werden bevorzugt eingesetzt. Der zurzeit gängigste Katalysator ist ein Quecksilberphenylneodecanoat, Thorcat 535 (Fa. Thor Especialidades S.A.). Ganz besonders bevorzugt werden jedoch Zinnkatalysatoren eingesetzt, beispielsweise Dioctylzinndi(2-ethyl-hexanoat), Dioctylzinndimerkaptid, Dioctylzinndilaurat (DOTL), Dibutylzinndilaurat (DBTL), Dibutylzinndicarboxylat, Butylzinntris-(2-ethylhexanoat), Dibutylzinndineodecanoat, Dioctylzinndiketanoat, Dibutylzinndiketanoat, Dioctylzinndiacetat, Dibutylzinndiacetat (DBTA), Dibutylzinndiacetat, Dibutylzinnmaleat, Dibutylzinndichlorid, Dibutylzinnsulfid, Dibutylzinnoxid (DBTO), Dibutylzinn(bisoktylmaleinat), Dibutylbis(dodecylthio)stannate, Dioctylzinndicarboxylat, wobei ganz besonders bevorzugt DBTL und/oder Dioctylzinndimercaptid eingesetzt wird. Selbstverständlich können die Katalysatoren auch in Kombination untereinander eingesetzt werden.

Gängige Katalysatoren werden z. B. von den Firmen Tosoh Chemicals, AirProducts, TIB Chemicals AG, Goldschmidt und Johnson Matthey angeboten.

Bei den Hilfsstoffen und/oder Additiven handelt es sich beispielsweise um Farbstoffe, Füllstoffe (wie beispielsweise Kalk), Silikonadditive, Zeolithpasten, Fließverbesserer und Hydrolyseschutzmittel.

In einer speziellen Ausführungsform können als Additive Mikrohohlkugeln eingesetzt werden, wenn syntaktische Polyurethane hergestellt werden sollen.

Unter dem Begriff Mikrohohlkugel sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Mineralische Hohlkugeln können beispielsweise aus Ton, Aluminiumsilikat, Glas oder Gemischen hergestellt werden. Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein. Bevorzugt weisen die organischen oder mineralischen Hohlkugeln einen Durchmesser von 1 bis 1000 mm, bevorzugt von 5 bis 200 mm auf. Vorzugsweise weisen die organischen oder mineralischen Hohlkugeln eine Schüttdichte von 0,1 bis 0,4 g/cm3 auf. Sie besitzen im Allgemeinen eine Wärmeleitfähigkeit von 0,03 bis 0,12 W/mK. Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikroglashohlkugeln 3M - Scotchlite® Glass Bubbles verwendet werden. Als kunststoffbasierende Mikrohohlkugeln können beispielsweise Expancel Produkte von Akzo Nobel eingesetzt werden.

Polycarbonatdiole werden entsprechend dem Stand der Technik aus Kohlensäurederivaten, zum Beispiel Dimethyl- oder Diphenylcarbonat oder Phosgen und Polyolen mittels Polykondensation erhalten.

Es ist bevorzugt, dass die Isocyanatkomponente und die Verbindung, die die NCO reaktiven Gruppen aufweist, kein physikalisches Treibmittel enthält. Ferner ist bevorzugt, dass diesen Komponenten kein Wasser zugesetzt wird. Somit enthalten die Komponenten besonders bevorzugt kein Treibmittel, abgesehen von minimalen Mengen an Restwasser, welches in technisch hergestellten Polyolen enthalten ist. Es ist bevorzugt, dass der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Verbindung, die die NCO reaktiven Gruppen aufweist, eingesetzt. Die Vermischung der NCO und OH reaktiven Komponenten kann mit den üblichen PUR-Verarbeitungsmaschinen erfolgen. In einer bevorzugten Ausführungsform erfolgt die Vermischung durch Niederdruckmaschinen oder Hochdruckmaschinen, besonders bevorzugt Niederdruckmaschinen.

Bei der Herstellung der erfindungsgemäßen Teile werden bevorzugt Niederdruckgießmaschinen mit dynamischen und statischen Mischern verwendet, wobei besonders bevorzugt Maschinen mit einem Ausstoß von > 10 kg/min und vorzugsweise statische Mischer eingesetzt werden.

Das Polyurethan kann entweder direkt auf das zu beschichtende Teil/Element aufgebracht werden (beispielsweise gegossen werden), wie es im Fall von "Field Joints" vorzugsweise durchgeführt wird. Alternativ kann die Beschichtung auch indirekt erfolgen, indem die Beschichtung separat hergestellt wird, die dann beispielsweise durch Verschrauben auf das zu isolierende Element aufgebracht wird. Diese Variante wird bevorzugt im Fall von "Bend Restriktoren" und "insulation covers" (wie z.B. X-Trees - Christmas trees sowie pipe insulation) durchgeführt.

Beispiele für andere Teile und Geräte im Bereich Off-Shore sind Generatoren, Pumpen und Bojen. Unter Off-Shore Rohr wird ein Rohr verstanden, welches zur Förderung von Öl und Gas dient. Hierbei wird das Öl/ Gas vom Meeresboden auf Plattformen, in Schiffe/Tanker oder auch direkt an Land gefördert. Unter Muffen sind die Verbindungen zwischen zwei Rohren oder Rohrteilen zu verstehen. Die Teile und Geräte bzw. Elemente im Off-Shore Bereich sind in fast ständigem Kontakt mit Meerwasser. Neben der Verwendung zur Isolierung von Gegenständen, welche der Förderung von Öl und Gas dienen, sind auch weitere Offshore Anwendungen, wie etwa die Isolierung von Gegenständen zur Fixierung und zum Schutz von Offshore-Windkraftanlagen und Kabelsystemen gemeint. Bevorzugt wird das beschichtete Teil in Meerwasser eingesetzt.

Oftmals haftet das Polyurethan schlecht auf den Teilen/Elementen. Das Polyurethan wird bevorzugt direkt auf die Oberfläche des späteren Teiles/Elements gegossen. Typische Oberflächen bestehen beispielsweise aus Kunststoffen, wie Epoxidharz, Polypropylen und/oder Metallen, wie beispielsweise Aluminium, Kupfer, Stahl oder Eisen. Zur besseren Haftvermittlung können zusätzlich externe Haftvermittler (Kleber, wie etwa Cilbond der Firma Cil oder Thixon und der Firma Rohm&Haas), physikalische Haftvermittler (wie etwa Elektronenstrahlbeschichtung, Chemische Vakuum Dampfabscheidung, Verbrennung von Silanen, wie etwa durch die Firma Silicoat zur Verfügung gestellt) oder interne Haftvermittler, wie etwa Epoxysilane eingesetzt werden.

Die Erfmdung soll anhand der nachfolgenden Beispiele näher erläutert werden.

### Beispiele

### Ausgangsverbindungen:

C4-Ether 1000 (z. B. Terathane^{®} 1000 der Firma Invista)
C4-Ether 2000 (z. B. Terathane^{®} 2000 der Firma Invista)
Araldite^{®} GY 250 der Firma Huntsman (Epoxyequivalent nach ISO 3001 = 187 g/eq Epoxy, Molgewicht < 700 g/mol)
Irganox^{®} 1135 der Firma Ciba
Thorcat^{®} 535: Quecksilberphenylneodecanoat der Firma Thor Especialidades S.A.
Dioctylzinndimercaptid (TIB KAT 214), Dibutylzinndilaurat (TIB KAT 218, DBTL), Butylzinntris-(2-ethylhexanoat) (TIB KAT 220) von der Firma TIB Chemicals AG
UOP-L Paste (Wasserfänger auf Zeolithbasis der Firma UOP)

Die folgenden Produkte sind Polyetherpolyole auf Basis EO/PO von der Firma Bayer MaterialScience AG:
Acclaim^{®} 11220 (Funktionalität 2, OH-Zahl 10 mg KOH/g Substanz, 0% Ethylenoxid)
Desmophen^{®} 3218 (Funktionalität 6, OH-Zahl 29 mg KOH/g Substanz, 18% Ethylenoxid)
Desmophen^{®} 20IK08 (Funktionalität 2, OH-Zahl 515 mg KOH/g Substanz, 0% Ethylenoxid)
Desmophen^{®} 50RE40 (Funktionalität 6, OH-Zahl 175 mg KOH/g Substanz, 20% Ethylenoxid)
Arcol^{®} 1074 (Funktionalität 3, OH-Zahl 27 mg KOH/g Substanz, 15% Ethylenoxid)

Die folgenden Produkte sind Polyisocyanate:
Desmodur^{®} CD-S: Carbodiimid/Uretonimin enthaltendes 4,4'-MDI (ca. 25 Gew.-% Carbodiimid/Uretonimin modifiziertes 4,4'-MDI und 75 Gew.-% 4,4'-MDI; 29,5 Gew.-% NCO Gehalt) von der Firma Bayer MaterialScience AG
Polyisocyanat 1: 50 Gew.-% modifiziertes 4,4'-MDI auf Basis von Tripropylenglycol, welches 23 Gew.-% NCO aufweist, und 50 Gew.-% Desmodur^{®} CD-S, so dass der NCO Gehalt der Mischung bei 26 Gew.-% liegt. Der Kristallisationspunkt liegt bei 15°C (nach 30 Tagen Lagerung).
Polyisocyanat 2: Umsetzungsprodukt aus 92,5 Gew.-Teilen Desmodur^{®} CD-S und 7,5 Gew.-Teilen Desmophen 20IK08, so dass der NCO-Gehalt bei 24,2 Gew.-% liegt. Der Kristallisationspunkt liegt bei -5°C (nach 30 Tagen Lagerung).
Polyisocyanat 3: modifiziertes Isocyanat mit 26 Gew.-% NCO-Gehalt, welches ein Umsetzungsprodukt aus 56,1 Gew.-% Desmodur^{®} CD-S und 21 Gew.-% 2,4'-MDI und 15,3 Gew.-% 4,4'-MDI mit 7,6 Gew.-% Desmophen 20IK08 ist. Das Produkt kristallisiert nicht.
Polyisocyanat 4: Umsetzungsprodukt aus 10 Gew.-Teilen Terathane^{®} 1000 und 90 Gew.-Teilen Desmodur^{®} CD-S mit einem NCO-Gehalt von 24,5 Gew.- %.

### Beispiel 1a (erfindungsgemäß):

Es wurden 100 Gew.-Teile des Polyisocyanates 1 mit 129,9 Gew.-Teilen einer Polyolformulierung (86,2 Gew.-Teile Desmophen^{®} 3218, 6,1 Gew.-Teile Desmophen^{®} 50RE40, 6,1 Gew.-Teile Arcol^{®} 1074, 23,1 Gew.-Teile 1,4-Butandiol, 5,8 Gew.-Teile Araldite^{®} GY 250, 0,8 Gew.-Teile Irganox^{®} 1135, 1,3 Gew.-Teile UOP-L Paste, 0,5 Gew.-Teile Thorcat^{®} 535) bei ca. 35°C umgesetzt und in eine 80°C warme Form gegossen. Es wurde nach 5 min entformt. Das Produkt war elastisch. Es wurde eine Beschichtung mit einer Shore D Härte von 55 erhalten. Dies ist eine typische Härte für field joints und insulation covers (Christmas Trees (X-Trees), pipe insulation oder ähnliches). Die Alterung in Wasser war sehr gut. Es wurde ein Block von 10x10x4 cm³ gegossen und 2 Monate bei 95°C in Wasser gelagert. Der Block zeigte unter diesen extremen Bedingungen auch nach 2 Monaten nur wenige kleine Risse.

### Beispiel 1b (erfindungsgemäß):

Es wurden 100 Gew.-Teile des Polyisocyanates 1 mit 119,4 Gew.-Teilen einer Polyolformulierung (76,9 Gew.-Teile Desmophen^{®} 3218, 5,6 Gew.-Teile Desmophen^{®} 50RE40, 5,6 Gew.-Teile Arcol^{®} 1074, 23,4 Gew.-Teile 1,4-Butandiol, 5,5 Gew.-Teile Araldite^{®} GY 250, 0,7 Gew.-Teile Irganox^{®} 1135, 1,2 Gew.-Teile UOP-L Paste, 0,5 Gew.-Teile Thorcat^{®} 535) bei ca. 35°C umgesetzt und in eine 80°C warme Form gegossen. Es wurde nach 5 min entformt. Das Produkt war elastisch. Es wurde eine Beschichtung mit einer Shore D Härte von 65 erhalten. Dies ist eine typische Härte für spezielle insulation covers (wie unter Beispiel 1 bereits erwähnt) mit einem hohen Zug-Modulus. Die Alterung in Wasser war sehr gut. Es wurde ein Block von 10x10x4 cm³ gegossen und 2 Monate bei 95°C in Wasser gelagert. Der Block zeigte unter diesen extremen Bedingungen auch nach 2 Monaten nur wenige kleine Risse.

### Beispiel 2 (erfindungsgemäß):

Es wurden 100 Gew.-Teile des Polyisocyanates 1 mit 129,4 Gew.-Teilen einer Polyolformulierung (86,2 Gew.-Teile Desmophen^{®} 3218, 6,1 Gew.-Teile Desmophen^{®} 50RE40, 6,1 Gew.-Teile Arcol^{®} 1074, 23,1 Gew.-Teile 1,4-Butandiol, 5,8 Gew.-Teile Araldite^{®} GY 250, 0,8 Gew.-Teile Irganox^{®} 1135, 1,3 Gew.-Teile UOP-L Paste, 0,0054 Gew.-Teile TIB KAT 214) bei ca. 35°C umgesetzt und in eine 80°C warme Form gegossen. Es wurde nach 5 min entformt. Das Produkt war elastisch. Es wurde eine Beschichtung mit einer Shore D Härte von 56 erhalten. Dies ist eine typische Härte für field joints und insulation covers (Christmas Trees (X-Trees), pipe insulation oder ähnliches). Die Alterung in Wasser war sehr gut.

### Beispiel 3 (erfindungsgemäß):

Es wurden 100 Gew.-Teile des Polyisocyanates 1 mit 129,4 Gew.-Teilen einer Polyolformulierung (86,2 Gew.-Teile Desmophen^{®} 3218, 6,1 Gew.-Teile Desmophen^{®} 50RE40, 6,1 Gew.-Teile Arcol^{®} 1074, 23,1 Gew.-Teile 1,4-Butandiol, 5,8 Gew.-Teile Araldite^{®} GY 250, 0,8 Gew.-Teile Irganox^{®} 1135, 1,3 Gew.-Teile UOP-L Paste, 0,0025 Gew.-Teile DBTL) bei ca. 35°C umgesetzt und in eine 80°C warme Form gegossen. Es wurde nach 5 min entformt. Das Produkt war elastisch. Es wurde eine Beschichtung mit einer Shore D Härte von 55 erhalten. Dies ist eine typische Härte für field joints und insulation covers (Christmas Trees (X-Trees), pipe insulation oder ähnliches). Die Alterung in Wasser war sehr gut.

### Beispiel 4 (erfindungsgemäß):

Es wurden 100 Gew.-Teile des Polyisocyanates 1 mit 129,4 Gew.-Teilen einer Polyolformulierung (86,2 Gew.-Teile Desmophen^{®} 3218, 6,1 Gew.-Teile Desmophen^{®} 50RE40, 6,1 Gew.-Teile Arcol^{®} 1074, 23,1 Gew.-Teile 1,4-Butandiol, 5,8 Gew.-Teile Araldite^{®} GY 250, 0,8 Gew.-Teile Irganox^{®} 1135, 1,3 Gew.-Teile UOP-L Paste, 0,016 Gew.-Teile TIB KAT 220) bei ca. 35°C umgesetzt und in eine 80°C warme Form gegossen. Es wurde nach 5 min entformt. Das Produkt war elastisch. Es wurde eine Beschichtung mit einer Shore D Härte von 55 erhalten. Dies ist eine typische Härte für field joints und insulation covers (Christmas Trees (X-Trees), pipe insulation oder ähnliches). Die Alterung in Wasser war sehr gut.

### Beispiel 5 (erfindungsgemäß):

Es wurden 100 Gew.-Teile des Polyisocyanates 1 mit 120,7 Gew.-Teilen einer Polyolformulierung (79,3 Gew.-Teile Desmophen^{®} 3218, 10,2 Gew.-Teile Terathane^{®} 2000, 23,8 Gew.-Teile 1,4-Butandiol, 5,1 Gew.-Teile Araldite^{®} GY 250, 0,7 Gew.-Teile Irganox^{®} 1135, 1,1 Gew.-Teile UOP-L Paste, 0,5 Gew.-Teile Thorcat^{®} 535) bei ca. 35°C umgesetzt und in eine 80°C warme Form gegossen. Es wurde nach 5 min entformt. Das Produkt war elastisch. Es wurde eine Beschichtung mit einer Shore D Härte von 57 erhalten. Dies ist eine typische Härte für field joints und insulation covers (Christmas Trees, pipe insulation). Die Alterung in Wasser war sehr gut. Es wurde ein Block von 10x10x4 cm³ gegossen und 2 Monate bei 95°C in Wasser gelagert. Der Block zeigte unter diesen extremen Bedingungen auch nach 2 Monaten nur wenige kleine Risse.

### Beispiel 6a (erfindungsgemäß):

Es wurden 100 Gew.-Teile des Polyisocyanates 2 mit 122 Gew.-Teilen einer Polyolformulierung (81,3 Gew.-Teile Desmophen^{®} 3218, 5,7 Gew.-Teile Desmophen^{®} 50RE40, 5,7 Gew.-Teile Arcol^{®} 1074, 21,8 Gew.-Teile 1,4-Butandiol, 5,2 Gew.-Teile Araldite^{®} GY 250, 0,7 Gew.-Teile Irganox^{®} 1135, 1,1 Gew.-Teile UOP-L Paste, 0,5 Gew.-Teile Thorcat^{®} 535) bei ca. 35°C umgesetzt und in eine 80°C warme Form gegossen. Es wurde nach 5 min entformt. Das Produkt war elastisch. Es wurde eine Beschichtung mit einer Shore D Härte von 55 erhalten. Dies ist eine typische Härte für field joints und insulation covers (Christmas Trees (X-Trees), pipe insulation oder ähnliches). Die Alterung in Wasser war sehr gut.

### Beispiel 6b (erfindungsgemäß):

Es wurden 100 Gew.-Teile des Polyisocyanates 2 mit 121,5 Gew.-Teilen einer Polyolformulierung (81,3 Gew.-Teile Desmophen^{®} 3218, 5,7 Gew.-Teile Desmophen^{®} 50RE40, 5,7 Gew.-Teile Arcol^{®} 1074, 21,8 Gew.-Teile 1,4-Butandiol, 5,2 Gew.-Teile Araldite^{®} GY 250, 0,7 Gew.-Teile Irganox^{®} 1135, 1,1 Gew.-Teile UOP-L Paste, 0,003 Gew.-Teile DBTL) bei ca. 35°C umgesetzt und in eine 80°C warme Form gegossen. Es wurde nach 5 min entformt. Das Produkt war elastisch. Es wurde eine Beschichtung mit einer Shore D Härte von 55 erhalten. Dies ist eine typische Härte für field joints und insulation covers (Christmas Trees (X-Trees), pipe insulation oder ähnliches). Die Alterung in Wasser war sehr gut.

### Beispiel 7 (nicht erfindungsgemäß):

Es wurden 100 Gew.-Teile des Polyisocyanats 1 mit 109,1 Gew.-Teilen einer Polyolformulierung (80 Gew.-Teile Terathane^{®} 2000, 22,86 Gew.-Teile 1,4-Butandiol, 6 Gew.-Teile Araldite^{®} GY 250 und 0,25 Gew.-Teile Thorcat 535) bei ca. 35°C umgesetzt und in eine 80°C warme Form gegossen. Es wurde nach 5 min entformt. Es wurde eine Beschichtung mit einer Shore D Härte von 57 erhalten. Dies ist eine typische Härte für field joints und insulation covers (Christmas Trees, pipe insulation). Allerdings zeigte das Produkt eine zu starke Hitzeentwicklung bei der Herstellung, so dass das Produkt technisch nicht nutzbar ist. Die Alterung in Wasser war unzureichend.

### Beispiel 8 (nicht erfindungsgemäß):

Es wurden 100 Gew.-Teile des Polyisocyanats 1 mit 103,1 Gew.-Teilen einer Polyolformulierung (80 Gew.-Teile Terathane^{®} 2000, 22,86 Gew.-Teile 1,4-Butandiol und 0,25 Gew.-Teile Thorcat 535) bei ca. 35°C umgesetzt und in eine 80°C warme Form gegossen. Es wurde nach 5 min entformt. Es wurde eine Beschichtung mit einer Shore D Härte von 57 erhalten. Dies ist eine typische Härte für field joints und insulation covers (Christmas Trees, pipe insulation). Allerdings zeigte das Produkt eine zu starke Hitzeentwicklung bei der Herstellung, so dass das Produkt technisch nicht nutzbar ist. Des Weiteren war die Alterung in Wasser unzureichend.

### Beispiel 9 (nicht erfindungsgemäß):

Es wurden 100 Gew.-Teile des Polyisocyanates 1 mit 95,2 Gew.-Teilen einer Polyolformulierung (67,5 Gew.-Teile Desmophen^{®} 50RE40, 4,4 Gew.-Teile Arcol^{®} 1074, 16,9 Gew.-Teile 1,4-Butandiol, 4,3 Gew.-Teile Araldite^{®} GY 250, 0,6 Gew.-Teile Irganox^{®} 1135, 1,0 Gew.-Teile UOP-L Paste, 0,5 Gew.-Teile Thorcat^{®} 535) bei ca. 35°C umgesetzt und in eine 80°C warme Form gegossen. Das Produkt zeigte starke Exothermie bei der Herstellung. Es lies sich erst im kalten Zustand aus der Form nehmen, da es bei hohen Temperaturen viel zu weich war. Somit ist das Produkt für die Anwendung unbrauchbar. Eine weitergehende Untersuchung war nicht möglich, und der Prüfkörper musste verworfen werden.

### Beispiel 10 (nicht erfindungsgemäß):

Es wurden 100 Gew.-Teile des Polyisocyanates 1 mit 117,9 Gew.-Teilen einer Polyolformulierung (90 Gew.-Teile Arcol^{®} 1074, 24,5 Gew.-Teile 1,4-Butandiol und 3,43 Gew.-Teile Araldite^{®} GY 250 und 0,005 Gew.-Teile DBTL) bei ca. 35°C umgesetzt und in eine 80°C warme Form gegossen. Es wurde nach 5 min entformt. Es wurde eine Beschichtung mit einer Shore D Härte von 57 erhalten. Die Alterung in Wasser war unzureichend.

### Beispiel 11 (nicht erfindungsgemäß):

Es wurden 100 Gew.-Teile des Polyisocyanates 1 mit 134,42 Gew.-Teilen einer Polyolformulierung (40 Gew.-Teile Acclaim^{®} 11220, 60 Gew.-Teile Arcol^{®} 1074, 24,9 Gew.-Teile 1,4-Butandiol, 6,87 Gew.-Teile Araldite^{®} GY 250, 1,15 Gew.-Teile Irganox^{®}1135 und 1,5 Gew.-Teile Thorcat^{®}535) bei ca. 35°C umgesetzt und in eine 80°C warme Form gegossen. Es wurde nach 5 min entformt. Es wurde eine Beschichtung mit einer Shore D Härte von 60 erhalten. Die Alterung in Wasser war unzureichend.

### Beispiel 12 (nicht erfindungsgemäß):

Es wurden 100 Gew.-Teile des Polyisocyanates 3 mit 114,5 Gew.-Teilen einer Polyolformulierung (90 Gew.-Teile Arcol^{®} 1074, 24,5 Gew.-Teile 1,4-Butandiol und 0,038 Gew.-Teile DBTL) bei ca. 35°C umgesetzt und in eine 80°C warme Form gegossen. Es wurde nach 5 min entformt. Es wurde eine Beschichtung mit einer Shore D Härte von 62 erhalten. Die Alterung in Wasser war unzureichend.

### Beispiel 13 (nicht erfindungsgemäß):

Es wurden 100 Gew.-Teile des Polyisocyanates 1 mit 114,5 Gew.-Teilen einer Polyolformulierung (90 Gew.-Teilen Arcol^{®} 1074, 24,5 Gew.-Teilen 1,4-Butandiol und 0,038 Gew.-Teilen DBTL) bei ca. 35°C umgesetzt und in eine 80°C warme Form gegossen. Es wurde nach 5 min entformt. Es wurde eine Beschichtung mit einer Shore D Härte von 57 erhalten. Die Alterung in Wasser war deutlich schlechter als in Beispiel 12.

### Beispiel 14 (nicht erfindungsgemäß):

Es wurden 100 Gew.-Teile des Polyisocyanates 1 mit 550,7 Gew.-Teilen einer Polyolformulierung (366,3 Gew.-Teile Desmophen 3218, 123,5 Gew.-Teile Desmophen^{®} 50RE40, 25,8 Gew.-Teile Arcol^{®} 1074, 24,5 Gew.-Teile Araldite^{®} GY 250, 4,0 Gew.-Teile Irganox^{®} 1135, 5,6 Gew.-Teile UOP-L Paste, 1,0 Gew.-Teile Thorcat^{®} 535) bei ca. 35°C umgesetzt und in eine 80°C warme Form gegossen. Das Produkt hatte lediglich eine Shore A Härte von 50 und riss beim Entformen. Das Elastomer war brüchig und zeigte keine Strukturfestigkeit. Eine weitergehende Untersuchung war nicht möglich, und der Prüfkörper musste verworfen werden.

### Beispiel 15 (erfindungsgemäß):

Es wurden 100 Gew.-Teile des Polyisocyanates 4 mit 123 Gew.-Teilen einer Polyolformulierung (81,2 Gew.-Teile Desmophen^{®} 3218, 5,7 Gew.-Teile Desmophen^{®} 50RE40, 5,7 Gew.-Teile Arcol^{®} 1074, 21,7 Gew.-Teile 1,4-Butandiol, 5,5 Gew.-Teile Araldite^{®} GY 250, 0,8 Gew.-Teile Irganox^{®} 1135, 1,3 Gew.-Teile UOP-L Paste, 0,001 Gew.-Teile TIB KAT 214) bei ca. 35°C umgesetzt und in eine 80°C warme Form gegossen. Es wurde nach 5 min entformt. Das Produkt war elastisch. Es wurde eine Beschichtung mit einer Shore D Härte von 53 erhalten. Dies ist eine typische Härte für field joints und insulation covers (Christmas Trees (X-Trees), pipe insulation oder ähnliches). Die Alterung in Wasser war sehr gut.

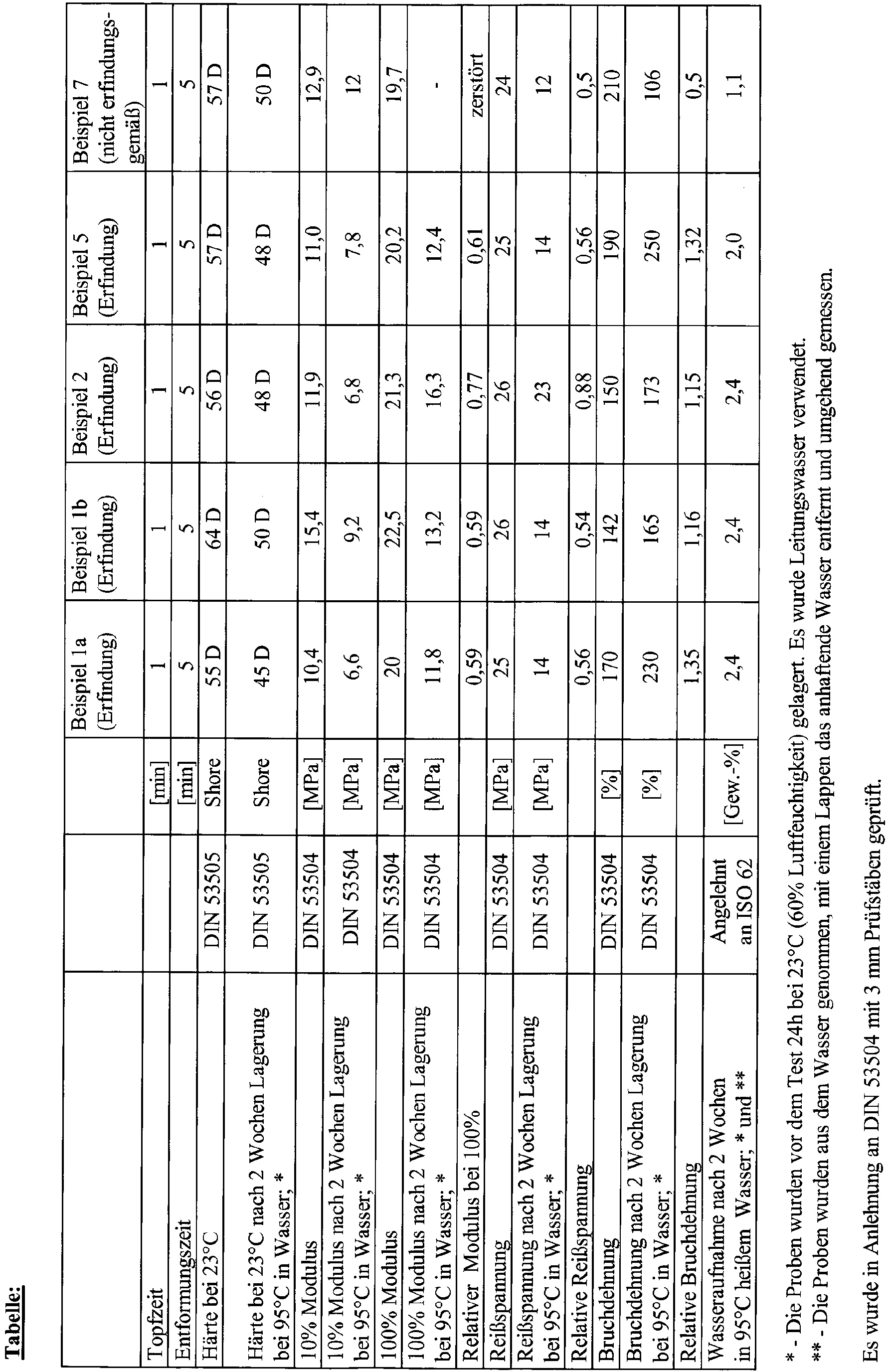

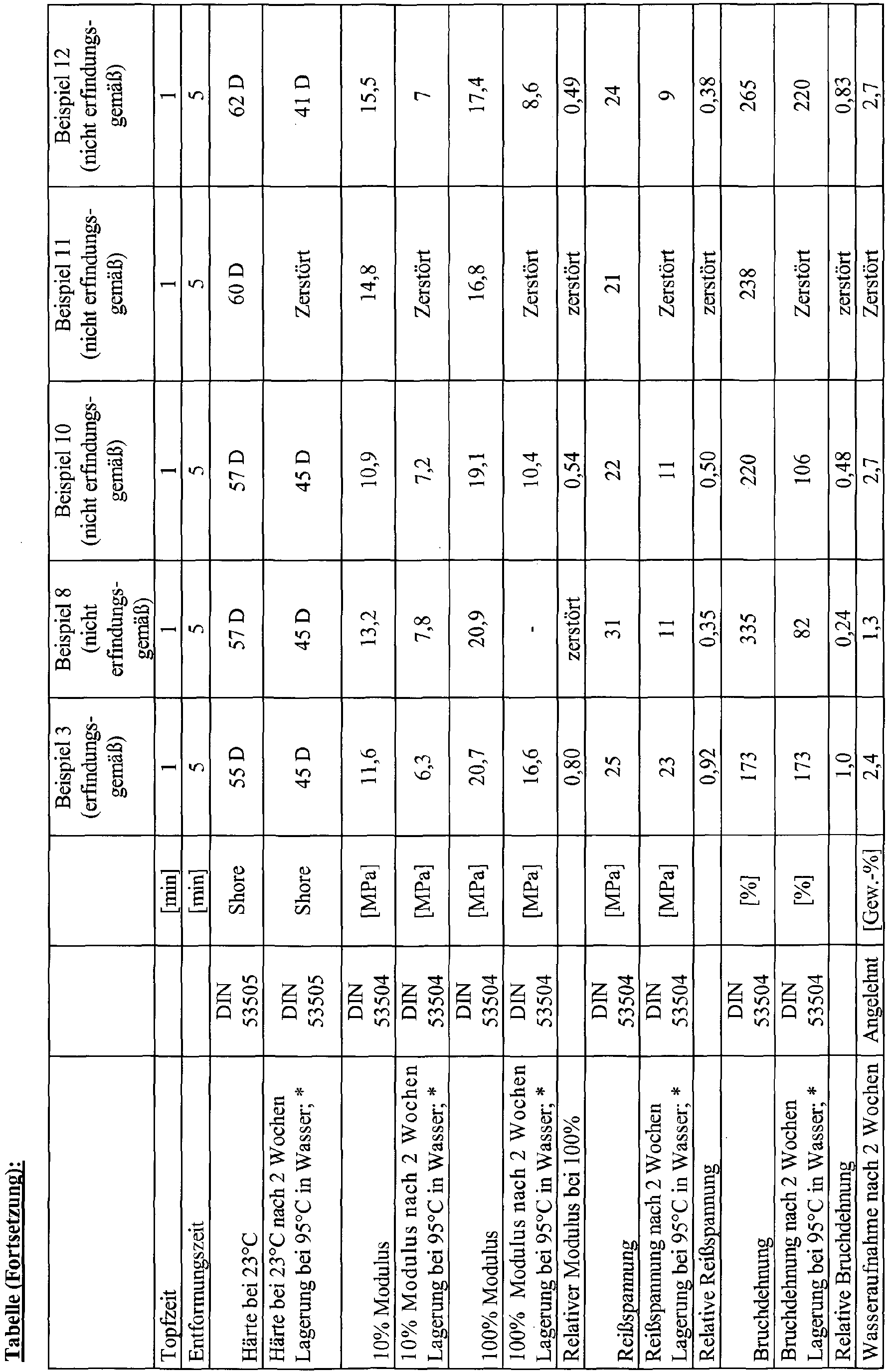

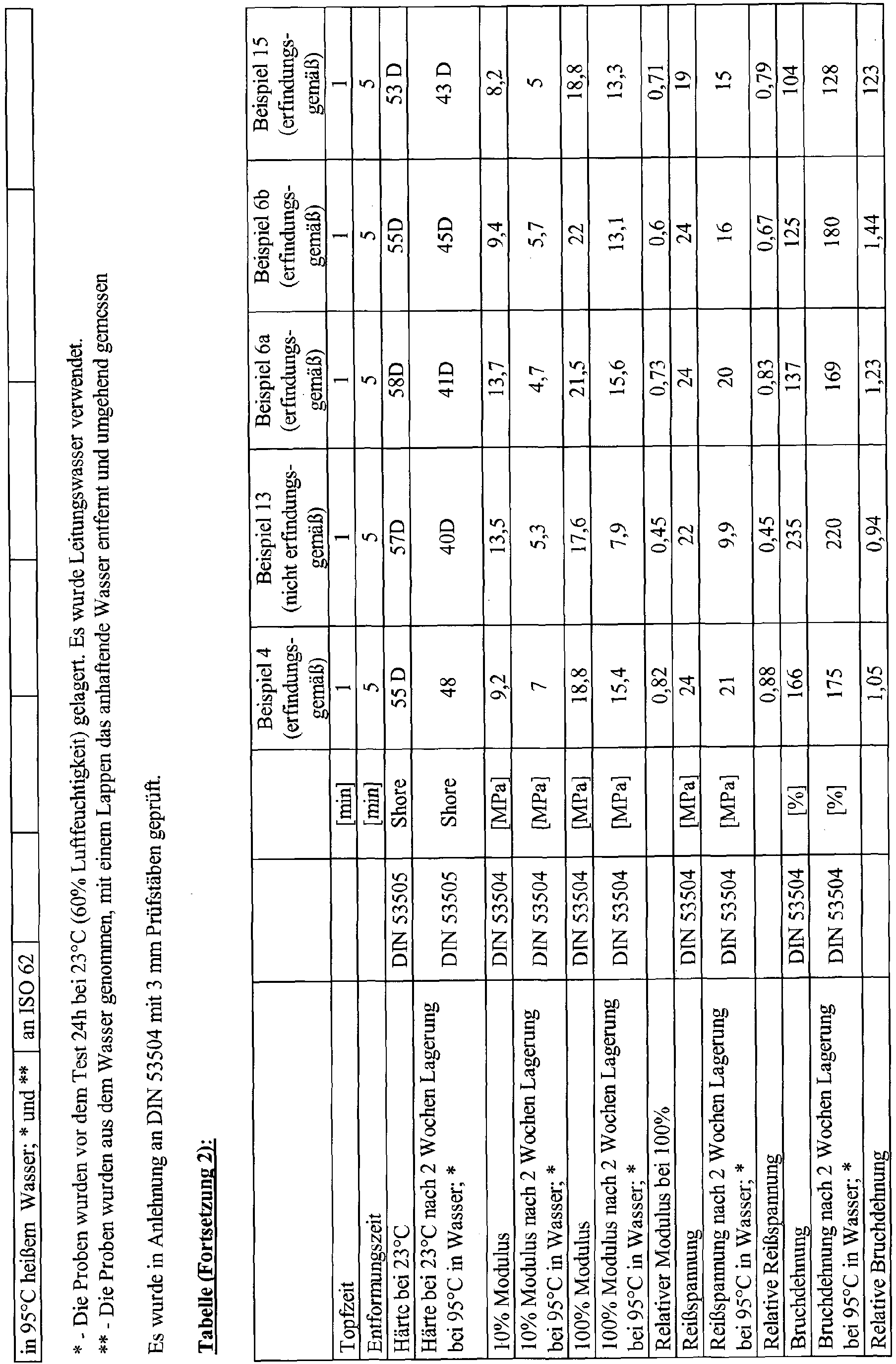

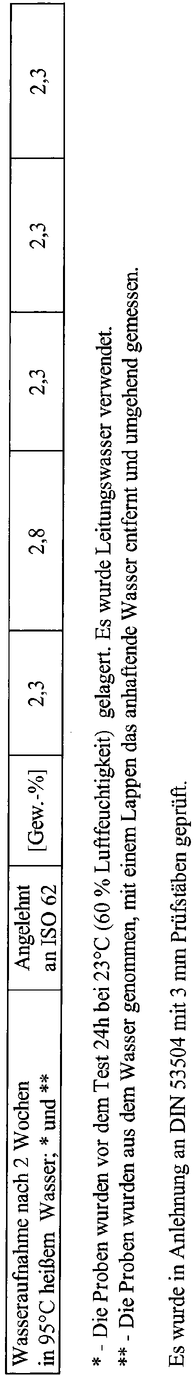

Neben der Temperaturalterung beeinflusst auch die Wasseralterung die Eigenschaften der Produkte. Beim Alterungstest in Wasser kann ein Elastomer zum einen durch Hydrolyse zersetzt/zerstört werden und zum anderen aufquellen. Besonders aussagekräftig im Hinblick auf eine eventuell auftretende Hydrolyse sind die Moduli bei 100%, die Bruchdehnung und die Reißspannung, weshalb diese Eigenschaften an den hergestellten Elastomeren insbesondere gemessen wurden.

Aus den Tabellen geht eindeutig hervor, dass die erfindungsgemäßen Elastomere bessere, also höhere relative Moduli bei 100%, höhere relative Bruchdehnungen und bessere relative Reißspannungen aufweisen. Die relativen Werte wurden rechnerisch ermittelt, wobei der jeweilige Wert nach Lagerung in Wasser durch den jeweiligen Wert vor der Lagerung in Wasser dividiert wurde. Durch die relativen Werte ist ein besserer Vergleich der unterschiedlichen Elastomere möglich.

## Patentansprüche

1. Beschichtete Teile, die direkt oder indirekt mit Polyurethanen beschichtet sind, wobei die Polyurethane
in Gegenwart mindestens eines Metallkatalysators aus der Gruppe bestehend aus Quecksilber-, Cadmium-, Cobalt-, Hafnium-, Aluminium-, Blei-, Eisen-, Zinn-, Zink-, Bismuth-, Zirkonium- und Titankatalysatoren und deren Abmischungen erhältlich sind aus:
a) mindestens einem Polyisocyanat basierend auf Diphenylmethandiisocyanat (MDI) mit einem NCO-Gehalt von 18 bis 34 Gew.-%, einem Anteil von höchstens 20 Gew.-%, bezogen auf eingesetztes Polyisocyanat a), an 2,4'-MDI-Isomer und einem Anteil von mindestens 5 Gew.-%, bezogen auf eingesetztes Polyisocyanat a), an mit Carbodiimid- und Uretonimingruppen modifiziertem Diphenylmethandiisocyanat, welches oberhalb von 30°C flüssig ist,
b) mindestens einem Ethylen- und/oder Propylenoxid basierten Polyetherpolyol mit einer Funktionalität von 5 bis 8, bevorzugt von 6 bis 7, einer OH-Zahl von 5 bis 45 mg KOH/g Substanz und einem Gehalt an Ethylenoxideinheiten von 0 bis 50 Gew.-%,
c) mindestens einem Kettenverlängerer mit einem Molekulargewicht von 62 bis 500 g/mol und einer Funktionalität von 2 bis 3,
d) 2 bis 15 Gew.-%, bezogen auf die Komponenten b) bis e), mindestens eines Epoxidharzes mit einem zahlenmittleren Molekulargewicht von ≤ 10000 g/mol,
e) 0 bis 50 Gew.-%, bezogen auf die Komponenten b) bis e), Polyolen aus der Gruppe bestehend aus Ethylenoxid und/oder Propylenoxid basierten Polyethern mit einer OH-Zahl von 50 bis 400 mg KOH/g Substanz, einer Funktionalität von 5 bis 7 und einem Gehalt an Ethylenoxideinheiten von 0 bis 50 Gew.-%, Ethylenoxid und/oder Propylenoxid basierten Polyethern mit einer OH-Zahl von 20 bis 200 mg KOH/g Substanz, einer Funktionalität von ≥2 bis <5 und einem Gehalt an Ethylenoxideinheiten von 0 bis 50 Gew.-%, Polyolen mit einer Funktionalität von 2 auf Basis von Polytetramethylenglykolen mit einem Molekulargewicht von 600 bis 3000 g/mol, OH-terminierten Polybutandienen, Polycarbonatdiolen und Abmischungen davon,
f) gegebenenfalls UV- und Oxidationsstabilisatoren,
g) gegebenenfalls Hilfsstoffen und/oder Additiven und
h) gegebenenfalls Haftvermittlern,
wobei das Verhältnis von NCO-Gruppen zu mit NCO-Gruppen reagierenden Gruppen der Komponenten b), c) und e) von 0,70:1 bis 1,3:1 liegt, vorzugsweise von 0,85:1 bis 1,2:1, besonders bevorzugt von 0,95:1 bis 1,1:1.

## Claims

1. Coated parts coated directly or indirectly with polyurethanes, the polyurethanes,
in the presence of at least one metal catalyst from the group consisting of mercury, cadmium, cobalt, hafnium, aluminum, lead, iron, tin, zinc, bismuth, zirconium, and titanium catalysts, and blends thereof, being obtainable from:
a) at least one polyisocyanate based on diphenylmethane diisocyanate (MDI) and having an NCO content of 18% to 34% by weight, a fraction of not more than 20% by weight, based on polyisocyanate a) employed, of 2,4'-MDI isomer and a fraction of at least 5% by weight, based on polyisocyanate a) employed, of diphenylmethane diisocyanate modified with carbodiimide groups and with uretonimine groups, and being liquid above 30°C,
b) at least one ethylene oxide and/or propylene oxide based polyether polyol having a functionality of 5 to 8, preferably of 6 to 7, an OH number of 5 to 45 mg KOH/g solids, and an ethylene oxide units content of 0% to 50% by weight,
c) at least one chain extender having a molecular weight of 62 to 500 g/mol and a functionality of 2 to 3,
d) 2% to 15% by weight, based on components b) to e), of at least one epoxy resin having a number-average molecular weight of ≤ 10 000 g/mol,
e) 0% to 50% by weight, based on components b) to e), of polyols from the group consisting of ethylene oxide and/or propylene oxide based polyethers having an OH number of 50 to 400 mg KOH/g solids, a functionality of 5 to 7, and an ethylene oxide units content of 0% to 50% by weight, ethylene oxide and/or propylene oxide based polyethers having an OH number of 20 to 200 mg KOH/g solids, a functionality of ≥ 2 to < 5, and an ethylene oxide units content of 0% to 50% by weight, polyols having a functionality of 2 and based on polytetramethylene glycols having a molecular weight of 600 to 3000 g/mol, OH-terminated polybutanedienes, polycarbonate diols, and blends thereof,
f) optionally UV stabilizers and oxidation stabilizers,
g) optionally auxiliaries and/or additives, and
h) optionally adhesion promoters,
the ratio of NCO groups to NCO-reactive groups in components b), c), and e) being from 0.70:1 to 1.3:1, preferably from 0.85:1 to 1.2:1, more preferably from 0.95:1 to 1.1:1.

## Revendications

1. Pièces revêtues, qui sont revêtues directement ou indirectement par des polyuréthanes, les polyuréthanes pouvant être obtenus, en présence d'au moins un catalyseur métallique du groupe constitué par les catalyseurs à base de mercure, de cadmium, de cobalt, de hafnium, d'aluminium, de plomb, de fer, d'étain, de zinc, de bismuth, de zirconium et de titane et leurs mélanges, à partir de :
a) au moins un polyisocyanate à base de diphénylméthanediisocyanate (MDI) présentant une teneur en NCO de 18 à 34% en poids, une proportion d'au plus 20% en poids, par rapport au polyisocyanate a) utilisé, d'isomère 2,4'-MDI et une proportion d'au moins 5% en poids, par rapport au polyisocyanate a) utilisé, de diphénylméthanediisocyanate modifié par des groupes carbodiimide et urétonimine, qui est liquide au-dessus de 30°C,
b) au moins un polyétherpolyol à base d'oxyde d'éthylène et/ou d'oxyde de propylène présentant une fonctionnalité de 5 à 8, de préférence de 6 à 7, un indice d'OH de 5 à 45 mg de KOH/g de substance et une teneur en unités d'oxyde d'éthylène de 0 à 50% en poids,
c) au moins un agent d'allongement de chaîne présentant un poids moléculaire de 62 à 500 g/mole et une fonctionnalité de 2 à 3,
d) 2 à 15% en poids, par rapport aux composants b) à e), d'au moins une résine époxyde présentant un poids moléculaire numérique moyen ≤ 10 000 g/mole,
e) 0 à 50% en poids, par rapport aux composants b) à e), de polyols du groupe constitué par les polyéthers à base d'oxyde d'éthylène et/ou d'oxyde de propylène présentant un indice d'OH de 50 à 400 mg de KOH/g de substance, une fonctionnalité de 5 à 7 et une teneur en unités d'oxyde d'éthylène de 0 à 50% en poids, de polyéthers à base d'oxyde d'éthylène et/ou d'oxyde de propylène présentant un indice d'OH de 20 à 200 mg de KOH/g de substance, une fonctionnalité ≥ 2 à < 5 et une teneur en unités d'oxyde d'éthylène de 0 à 50% en poids, de polyols présentant une fonctionnalité de 2 à base de polytétraméthylèneglycols présentant un poids moléculaire de 600 à 3000 g/mole, de polybutane-diènes terminés par OH, de polycarbonatediols et leurs mélanges,
f) le cas échéant des stabilisants contre les UV et contre l'oxydation,
g) le cas échéant des adjuvants et/ou des additifs
et
h) le cas échéant des promoteurs d'adhérence,
le rapport des groupes NCO aux groupes réagissant avec NCO des composants b), c) et e) valant 0,70:1 à 1,3:1, de préférence 0,85:1 à 1,2:1, de manière particulièrement préférée 0,95:1 à 1,1:1.
